# EUROPEAN PATENT APPLICATION

(11) **EP 1 972 847 A1**
(43) Date of publication of application: **24.09.2008**
(21) Application number: 07104610.6
(22) Date of filing: 21.03.2007
(51) Int. Cl.: F16M 13/02, H04N 5/64

(54) **Display suspending frame**

(71) Applicant: Associated Industries China, Inc., Taipei (TW)
(72) Inventor: Lin, Watt, Taipei (TW)
(74) Representative: Viering, Jentschura & Partner

(57) **Abstract**

A display suspending frame comprises a seat (10) having a back surface (11) and two front surfaces (12) which are supporter at two opposite edges of the back surface (11) by using respective vertical surfaces; the two front surfaces (12) being parallel to the back surface (11); an upper side of the back surface (11) having a positioning hole (111), in assembly, the seat (10) being locked to a wall by screwing through the positioning hold (111); and each front surface (12) having two long holes (123) which are arranged at a lower side of the front surface (12); each long hole (123) being formed with an enlarged receiving hole (123a); an upper edge of each front surface (12) having two recesses (124). A lower side of the back surface (11) has at least two aligning holes (112); in assembly, the seat (10) is locked to a wall by screwing through the aligning holes (112).

## Description

### FIELD OF THE INVENTION

The present invention relates to displays, and particularly to a display suspending frame which is suitable for different sizes of displays with easier installation. If the different display is updated, the suspending frame is unnecessary to the updated.

### Background of the invention

With the improvement of technology, thin TVs have become a main trend commercially. Advantage of the TVs is that it can be suspended on a wall. Current way for suspending the TV is by using two supporters that are locked onto a wall, or using a dedicated supporting frame. However these kinds of supporting ways are inconvenient to users. For example if it is desired to update the display, the frame must be detached for installing another one so that the wall is destroyed to have an unbeautiful outlook. Moreover, in installing, the positions between the frame and wall must be measured in advance. Once the measurement is wrong, the work must be performed again. All these actions are inconvenient.

### SUMMARY OF THE INVENTION

Accordingly, the primary object of the present invention is to provide a display suspending frame which is suitable for different sizes of displays. If the different display is updated, the suspending frame is unnecessary to the updated.

To achieve above objects, the present invention provides a display suspending frame which has the following elements - a seat with at least a positioning hole, two long holes and two recess.

A seat has a back surface and two front surfaces that are supported at two opposite edges of the back surface by using respective vertical surfaces. The two front surfaces are parallel to the back surface.

An upper side of the back surface has a positioning hole. A lower side of the back surface has two aligning holes. In assembly, the seat can be locked to a wall by screwing through the positioning hole and the aligning holes.

Each front surface has two long holes that are arranged at a lower side of the front surface. An upper side of each long hole is formed with an enlarged receiving hole. An upper edge of each front surface has two recesses.

Furthermore, there is at least a pair of aligning holes on the back seat surface, which are used for wall positioning. The holes can be a long one so to provide room for screws lock up devise to be re-adjusted, and then secured once the position is confirmed. In another way, it can be a positioning hole that located in the center bottom of seat back surface. After the screws lock up devise is secured through the hole, the seat will be freely in position due to its nature of weight.

A back casing has a plurality of screw holes for receiving a plurality of suspending unit. Each suspending unit has a screw, a manual operated nut and a washer. The screw passes through the washer and then is screwed into the manual operated nut. The manual operated nut has a stop, a sliding stop portion and a connecting portion connected between the stop and the sliding stop portion. A size of the connecting portion is smaller than a size of the long hole. When the sliding stop portion passes through the receiving hole, the connecting portion slides downwards along the long hole.

When the screw screws into the manual operated nut, the washer is tightened between the screw and the manual operated nut. The friction in between screw and washer is greater than the friction in between screw and screw hole, and so the length of screw enables the frame to be able to secure different size of display. Therefore, when the user holes the sliding stop portion to rotate, the screw is driven synchronously to screw out of or into the screw hole in the display. When the stop stops against the display, it can be locked to the display tightly. The user can adjust the screw with respect to the manual operated nut so as to match the depth of the screw hole of the display. Thereby one screw is sufficient to match the different size of screw hole. The present invention is also suitable for double thread screws with the same effect.

When the back casing of the display is locked with the suspending units, the suspending units are aligned to the receiving holes or the recesses. Then the display slides downwards along the long holes and the recesses so as to complete the object of suspending. Moreover, since the upper end of each recess is opened, in assembly, it is only necessary to align the suspending units to the lower receiving holes. The operation is easy and conveniently.

In the present invention, the suspending frame is firstly located on a wall and the display is locked to the suspending frame. The locking units pass through the positioning holes and the aligning holes so as to fix the suspending frame to the wall. The aligning hole is a long hole so that when the locking units are not completely locked into the wall, the suspending frame can rotate so as to fine adjust the position of the suspending frame. When the position of the suspending frame is determined, the locking unit is tightened.

Besides, since the gaps of the screw holes of the backside of the display are confined by international specification, which is confined It to the sizes of 10cmx10cm of 7.5cm×7.5cm. Then the sizes of the long holes and recesses can be determined. The present invention can be designed to suit above mentioned two specifications so that only one suspending frame is sufficient for two different sizes of displays. If the different display is updated, the suspending frame is unnecessary to the updated. Furthermore, in the present invention, the positions of the long holes and the recesses can be arranged symmetrically. Moreover, in the present invention, the display can be arranged along a direction, which is vertical to the original direction.

The various objects and advantages of the present invention will be more readily understood from the following detailed description when read in conjunction with the appended drawing.

### Brief Description of the Drawings

Fig. 1 is a perspective view showing the embodiment of the present invention.
Fig. 2 is a perspective view showing the use of the present invention.
Fig. 3 is a cross sectional view of Fig. 2.
Fig. 4 is a perspective view showing the application of the present invention.
Fig. 5 is a cross sectional view of Fig. 4.
Fig. 6A is a perspective view of the suspending frame of the present invention.
Fig. 6B is an exploded view of the suspending frame of the present invention.
Figs. 6C and 6D are cross sectional views about the use of the suspending frame of the present invention.
Fig. 7 is a perspective view showing that the suspending frame of the present invention is suspended to a wall.
Figs. 8 and 9 show the application of the present invention, where the position of the display is fine-adjusted.

### DETAILED DESCRIPTION OF THE INVENTION

In order for those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

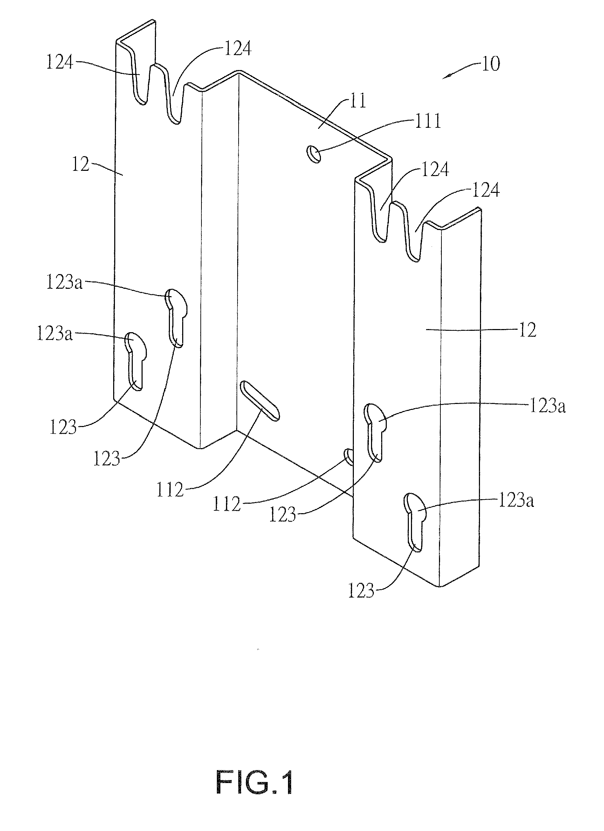

Referring to Fig. 1, the suspending frame of a display of the present invention is illustrated. The present invention has the following elements.

A seat 10 has a back surface 11 and two front surfaces 12 which are supported at two opposite edges of the back surface 11 by using respective vertical surfaces. The two front surfaces 12 are parallel to the back surface 11.

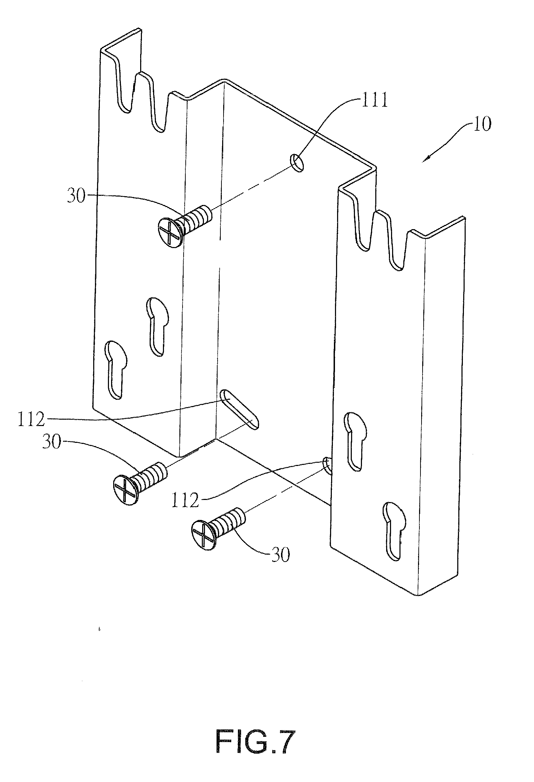

An upper side of the back surface 11 has a positioning hole 111. A lower side of the back surface 11 has two aligning holes 112. In assembly, the seat 10 can be locked to a wall by screwing through the positioning hole 111 and the aligning holes 112 (see Fig. 7).

Each front surface 12 has two long holes 123 which are arranged at a lower side of the front surface 12. An upper side of each long hole 123 is formed with an enlarged receiving hole 123a. An upper edge of each front surface 12 has two recesses 124.

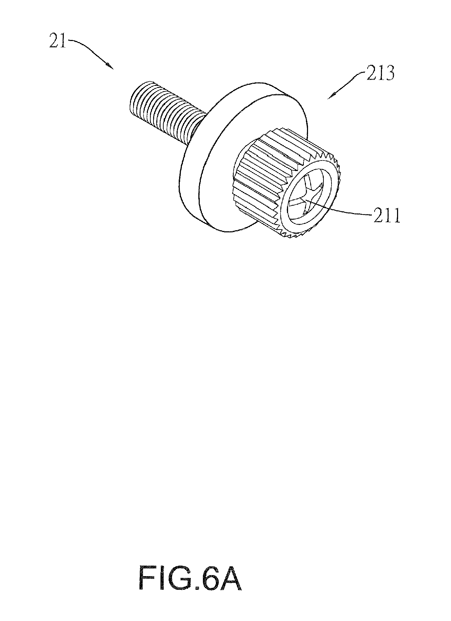

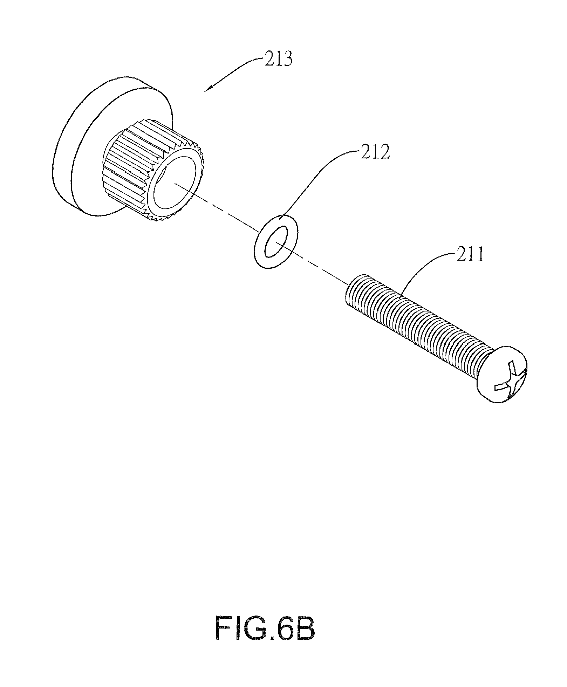

A back casing 20 has a plurality of screw holes for receiving a plurality of suspending unit 21. Referring to Figs. 6A to 6C, each suspending unit 21 has a screw 211, a manual operated nut 213 and a washer 212. The screw 211 passes through the washer 212 and then is screwed into the manual operated nut 213. The manual operated nut 213 has a stop 213a, a sliding stop portion 213b and a connecting portion 213c connected between the stop 213a and the sliding stop portion 213b. A size of the connecting portion 213c is smaller than a size of the long hole 123. When the sliding stop portion 213b passes through the receiving hole 123a, the connecting portion 213c slides downwards along the long hole 123.

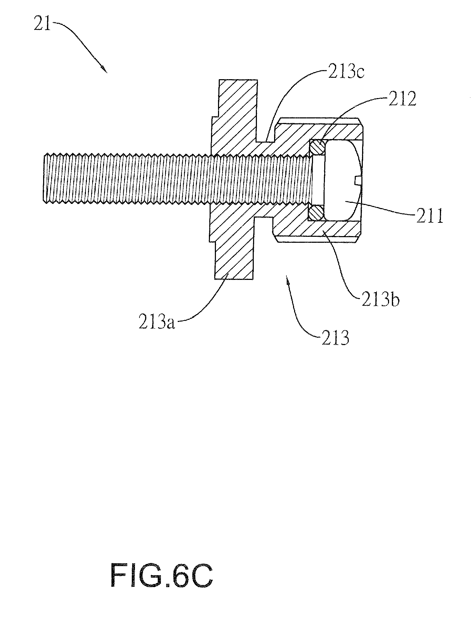

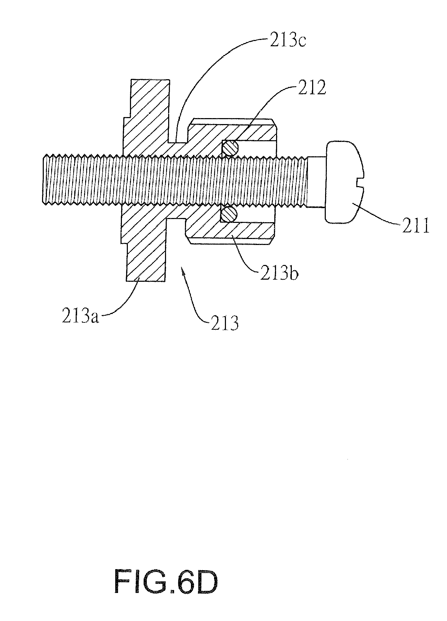

Referring to Fig. 6C, when the screw 211 screws into the manual operated nut 213, the washer 212 is tightened between the screw 211 and the manual operated nut 213. The friction force is greater than the friction force induced by screwing the screw 211 into the screw hole. Therefore, when the user holds the sliding stop portion 213 b to rotate, the screw 211 is driven synchronously to screw out of or into the screw hole in the display. When the stop 213a stops against the display, it can be locked to the display tightly. Referring to Fig. 6d, the user can adjust the screw with respect to the manual operated nut 213 so as to match the depth of the screw hole of the display. Thereby one screw is sufficient to match the different size of screw hole. The present invention is also suitable for double thread screws with the same effect.

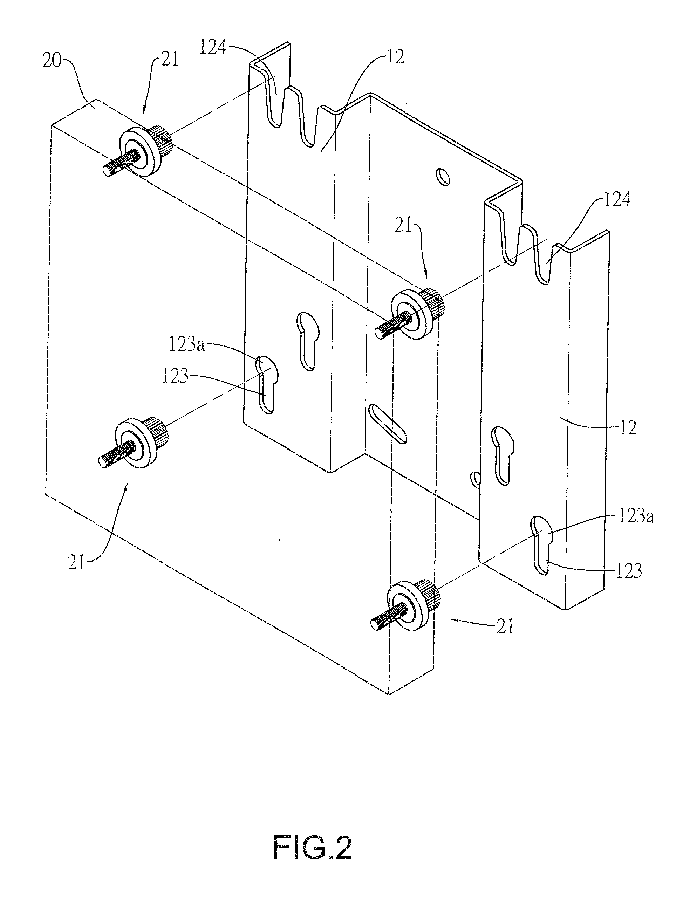

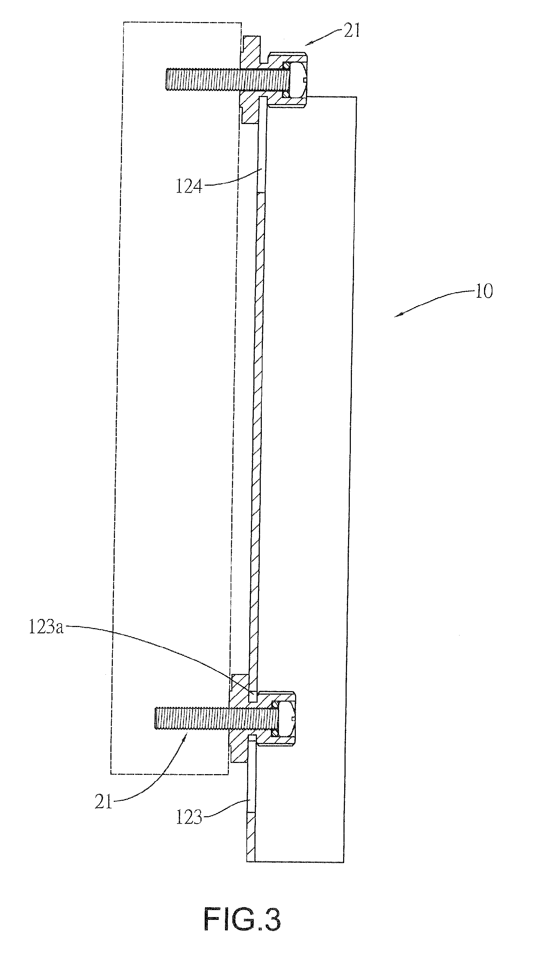

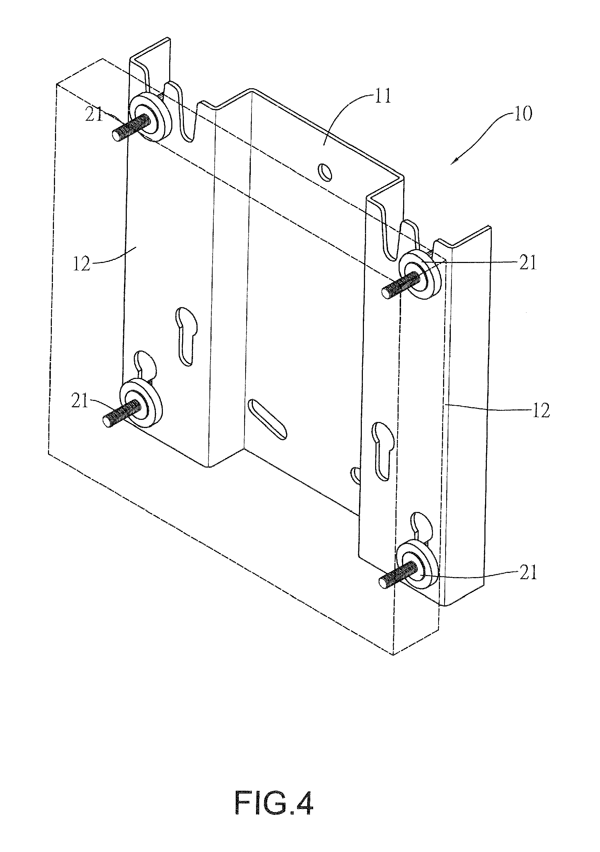

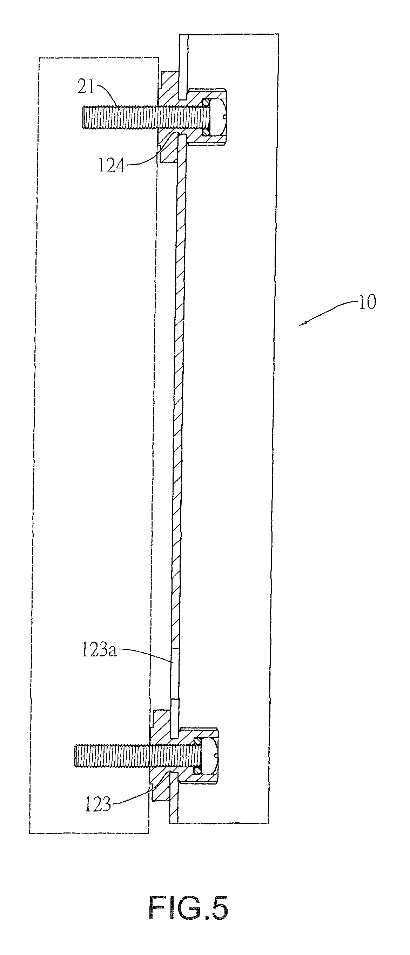

Referring to Figs. 2 to 5, when the back casing 20 of the display is locked with the suspending units 21, the suspending units 21 are aligned to the receiving holes 123a or the recesses 124. Then the display slides downwards along the long holes 123 and the recesses 124 so as to complete the object of suspending. Moreover, since the upper end of each recess 124 is opened, in assembly, it is only necessary to align the suspending units 21 to the lower receiving holes 123a. The operation is easy and conveniently.

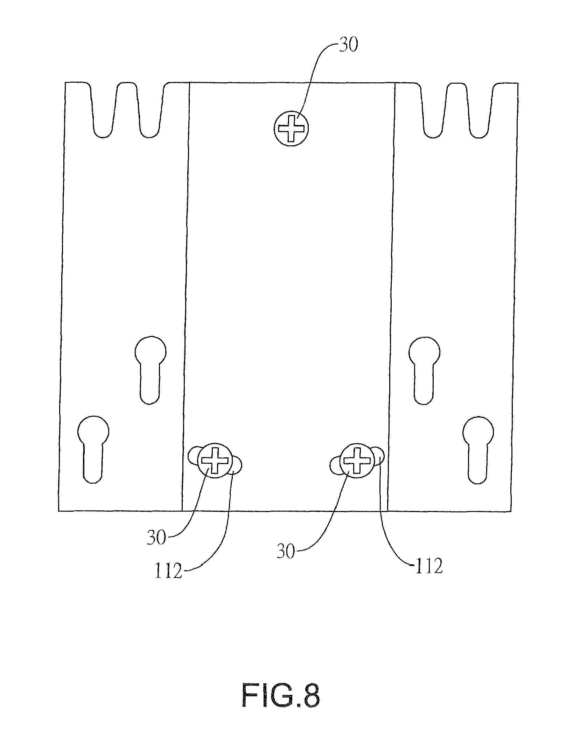

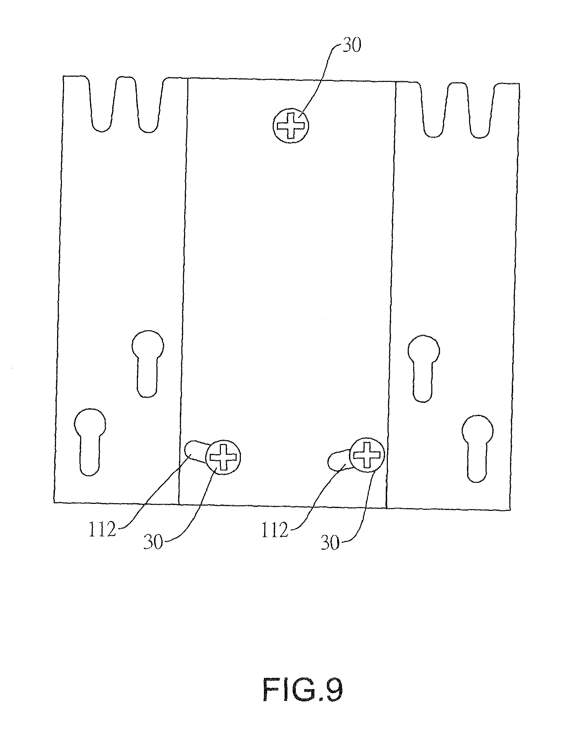

Referring to Figs. 7 to 9, in the present invention, the suspending frame is firstly located on a wall and the display is locked to the suspending frame. The locking units 30 pass through the positioning holes 111 and the aligning holes 112 so as to fix the suspending frame to the wall. The aligning hole 112 is a long hole so that when the locking units30 are not completely locked into the wall, the suspending frame can rotate to fine adjust the position of the suspending frame. When the position of the suspending frame is determined, the locking units 30 are tightened.

Besides, since the gaps of the screw holes in the backside of the display are confined by the international specification, which is confined to the sizes of 10cm×10cm or 7.5cmx7.5cm. Then the sizes of the long holes 123 and recesses 124 can be determined. The present invention can be designed to suit above mentioned two specifications so that only one suspending frame is sufficient for two different sizes of displays. If the different display is updated, the suspending frame is unnecessary to the updated. Furthermore, in the present invention, the positions of the long holes 123 and the recesses 124 can be arranged symmetrically. Moreover, in the present invention, the display can be arranged along a direction, which is vertical to the original direction.

The present invention is thus described; it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A display suspending frame, comprising:
a seat having a back surface and two front surfaces which are supported at two opposite edges of the back surface by using respective vertical surfaces; the two front surfaces being parallel to the back surface ;
an upper side of the back surface having a positioning hole; in assembly, the seat being locked to a wall by screwing through the positioning hole; and
each front surface having two long holes which are arranged at a lower side of the front surface; each long hole being formed with an enlarged receiving hole; an upper edge of each front surface having two recesses.

2. The display suspending frame as claimed in claim 1, wherein a lower side of the back surface has at least two aligning holes; in assembly, the seat is locked to a wall by screwing through the aligning holes.

3. The display suspending frame as claimed in claim 2, wherein each aligning hole has a long shape.

4. The display suspending frame as claimed in claim 1, wherein the long holes and recesses on one of the two front surfaces are symmetrical to the long holes and recesses on another front surface.

5. The display suspending frame as claimed in claim 1, wherein each receiving hole is at an upper side of a respective one of the long holes.

6. The display suspending frame as claimed in claim 1, further comprising a plurality of suspending units for combining a display to the display suspending frame; wherein each suspending unit has a screw, a manual operated nut and a washer; the screw passes through the washer and then is screwed into the manual operated nut; the manual operated nut has a stop, a sliding stop portion and a connecting portion connected between the stop and the sliding stop portion; a size of the connecting portion is smaller than a size of the long hole; when the sliding stop portion passes through the receiving hole, the connecting portion slides downwards along the long hole.

7. The display suspending frame as claimed in claim 6, wherein the washer is tightly engaged to the screw.
